# EUROPEAN PATENT APPLICATION

(11) **EP 4 726 642 A1**
(43) Date of publication of application: **15.04.2026**
(21) Application number: 25206798.8
(22) Date of filing: 06.10.2025
(51) Int. Cl.: G06Q 50/20, A61B 5/1171, G06V 40/10, G06V 40/16

(54) **CANDIDATE RESPONSE ANALYSIS DURING TIMED INTERVAL OF DIGITAL ASSESSMENT**

(30) Priority: 11.10.2024 IN 202421077312
(71) Applicant: Tata Consultancy Services Limited, Maharashtra (IN)
(72) Inventor: PARASHAR, Ajay, 400607 Thane West, Maharashtra (IN); BANERJEE, Piuli, 500034 Hyderabad, Telangana (IN); CHATTERJEE, Sumona, 110001 New Delhi, Delhi (IN); VASISTHA, Sarveshwar Rambharosilal, 400607 Thane West, Maharashtra (IN)
(74) Representative: Goddar, Heinz J.

(57) **Abstract**

Log data recorded during digital assessments has hardly been ingested for analyzing log information to derive behavioral patterns that enable malpractice detection. A method and system for candidate response analysis during timed interval of digital assessment using statistical approach. The method provides a two-stage approach wherein the first stage analyzes raw log data of candidates to extract a set of attributes capturing activities of candidates in response to the questions appearing in the digital assessment. Unique statistical analysis is performed on the extracted attributes to determine outlier candidates that reflect anomalous behavior. At the second stage the set of outlier candidates are analyzed and filtered based on a plurality of checks against events that contribute towards possible malpractice or unfair means involved before and during exam duration. Thus, the outlier candidates that map to any one of the checks are identified to be attempting exam with Unfair means (UFM).

## Description

### CROSS-REFERENCE TO RELATED APPLICATIONS AND PRIORITY

The present application claims priority to Indian application no. 202421077312, filed on October 11, 2024.

### TECHNICAL FIELD

The embodiments herein generally relate to the field of data analytics and intelligence and, more particularly, to a method and system for candidate response analysis during timed interval of digital assessment using statistical approach.

### BACKGROUND

The inclusion of online examinations, e-examinations, or digital assessments have offered alternatives to the large-scale examination rooms with paper- and-pencil invigilated examinations. They offer new opportunities for the inclusion of innovative pedagogies and assessment where examinations are considered necessary. However, like any offline exams, addressing malpractice or cheating by the candidates appearing for these exams is a major area of concern. Unlike the invigilator in the offline exam, digital assessment demands news techniques to identify candidates attempting to cheat.

To develop real time automated invigilation systems with high level accuracy, which efficiently manage false positives, research on detecting anomalous behavioral patterns of candidates or examinees is critical. Existing systems and methods mostly rely on video monitoring for detecting cheating or malpractice. However a lot of information is hidden in the manner which examinees respond to the questions during digital assessment. Some approaches do analyze candidate responses, but the analysis is focused on learning curve and capability of candidate. Analyzing videos may not always be efficient and effective way of detecting undesired actions of candidates during the digital assessment. The log data of candidates during exam hold huge amount of information, however the technical challenge lies in devising techniques that enable to derive the right and true insights on possible malpractice in time and cost efficient manner. Currently huge volume of log data is captured but not utilized for deriving insights. This information in log data goes untapped.

### SUMMARY

Embodiments of the present disclosure present technological improvements as solutions to one or more of the above-mentioned technical problems recognized by the inventors in conventional systems.

For example, in one embodiment, a method for candidate response analysis during timed interval of digital assessment using statistical approach is provided. The method includes extracting a plurality of metrics and activity parameters from a sourced raw log data associated with a plurality of candidates attempting a digital assessment across a plurality of assessment centers in a single drive of the digital assessment, wherein the plurality of metrics and activity parameters are extracted for an initial time window and a terminal time window predefined within an exam duration, wherein the plurality of metrics and activity parameters, recorded at regular time interval for an exam duration for each candidate among the plurality of candidates, comprises a candidate Roll Number, a logged time, a device address of a device on which the exam is attempted, an a launcher type of the device, an IP Address of the device, an exam Subject ID, a Candidate Status recorded against time, a Question ID of each Question among a plurality of questions in the digital assessment, a set of activities associated while responding to each question, a plurality of Options IDs available for the associated Question ID, a selected Option ID for responding to a Question associated with the Question ID, a System Name, and a selected Question Language.

Further, the method includes extracting a plurality of attributes of each of the plurality of candidates by processing the plurality of metrics and activity parameters. The plurality of attributes associated with the initial time window for each of the plurality of candidates comprising Total Activities performed from among the set of activities, Total Visits to the Question ID, Total Saves of the selected option ID for the plurality of questions ques, Total Marked questions for review among the plurality of question, the Questions IDs Visited, the Questions IDs Saved, the Questions IDs Marked for review, unique Questions visited, the unique Question IDs saved with selected option ID, the unique Questions marked for review, questions only visited, questions only saved, and questions only marked for review. The plurality of attributes associated with the terminal time window for each of the plurality of candidates comprising the total Questions saved, the total Questions visited and saved, the total questions saved without change in the selected option ID, the total Question saved with change in the selected option ID.

Furthermore, the method includes determining a set of outlier candidates from among the plurality of candidates based on a statistical technique applied on the plurality of attributes of each of the plurality of candidates. The statistical technique determines a candidate from among the plurality of candidates to fall into the set of outlier candidates based on a five metric criteria determining if: (a) the total activities of the candidate, during the initial time window, are greater than an average of total activities performed by the plurality of candidates summed up with standard deviation of the total activities of the plurality of candidates, (b) the total visits to the Question ID, during the initial time window, is greater than sum of average visits to the Question ID by the plurality of candidates and the standard deviation of the total visits of the plurality of candidates, (c) the total saves of the selected option ID, during the initial time window, are less than difference of average saves of the option ID for the Question ID by the plurality of candidates and the standard deviation computed for the plurality of candidates for the total saves, (d) the total Questions visited and saved is greater than summation of mean for the plurality of candidates performing visiting and saving of the questions, and standard deviation computed for the plurality of candidates performing visiting and saving of the questions, and (e) the total Questions with changes in the selected option ID is greater than a mean computed for changing selected option ID by the plurality of candidates summed up with the standard deviation computed for the plurality of candidates associated with the activity. Furthermore, the method includes identifying the candidate from the set of outlier candidates, as candidate involved in Unfair Means (UFM) during the digital assessment if information derived from the raw log data and additional information associated with the candidate and an assessment center among the plurality of assessment centers maps to at least one of a plurality of checks. The plurality of checks based on the information of candidate comprising: (a) an idle time above a predefined threshold exists between saving the selected option IDs of two consecutive questions, (b) score achieved by the set of outlier candidates falls into the Top Scorer Candidates bracket, (c) the assessment center has past records of malpractice, (d) one or more security incidents are raised and recorded for the digital assessment at the assessment center, (e) the drive belongs to a high scoring drive and the score obtained is not encrypted, (f) a seating arrangement of one or more among the set of outlier candidates depicts a pattern among known patterns of cheating associated seating arrangement, (g) a suspected device address is being used, and (h) a candidate is identified to be a demographic suspect due to mismatch between place of the assessment center and a home address of the candidate.

In another aspect, a system for candidate response analysis during timed interval of digital assessment using statistical approach is provided. The system comprises a memory storing instructions; one or more Input/Output (I/O) interfaces; and one or more hardware processors coupled to the memory via the one or more I/O interfaces, wherein the one or more hardware processors are configured by the instructions to extract a plurality of metrics and activity parameters from a sourced raw log data associated with a plurality of candidates attempting a digital assessment across a plurality of assessment centers in a single drive of the digital assessment, wherein the plurality of metrics and activity parameters are extracted for an initial time window and a terminal time window predefined within an exam duration, wherein the plurality of metrics and activity parameters, recorded at regular time interval for an exam duration for each candidate among the plurality of candidates, comprises a candidate Roll Number, a logged time, a device address of a device on which the exam is attempted, an a launcher type of the device, an IP Address of the device, an exam Subject ID, a Candidate Status recorded against time, a Question ID of each Question among a plurality of questions in the digital assessment, a set of activities associated while responding to each question, a plurality of Options IDs available for the associated Question ID, a selected Option ID for responding to a Question associated with the Question ID, a System Name, and a selected Question Language.

Further, the system is configured to extract a plurality of attributes of each of the plurality of candidates by processing the plurality of metrics and activity parameters. The plurality of attributes associated with the initial time window for each of the plurality of candidates comprising Total Activities performed from among the set of activities, Total Visits to the Question ID, Total Saves of the selected option ID for the plurality of questions ques, Total Marked questions for review among the plurality of question, the Questions IDs Visited, the Questions IDs Saved, the Questions IDs Marked for review, unique Questions visited, the unique Question IDs saved with selected option ID, the unique Questions marked for review, questions only visited, questions only saved, and questions only marked for review. The plurality of attributes associated with the terminal time window for each of the plurality of candidates comprising the total Questions saved, the total Questions visited and saved, the total questions saved without change in the selected option ID, the total Question saved with change in the selected option ID.

Furthermore, the system is configured to determine a set of outlier candidates from among the plurality of candidates based on a statistical technique applied on the plurality of attributes of each of the plurality of candidates. The statistical technique determines a candidate from among the plurality of candidates to fall into the set of outlier candidates based on a five metric criteria determining if: (a) the total activities of the candidate, during the initial time window, are greater than an average of total activities performed by the plurality of candidates summed up with standard deviation of the total activities of the plurality of candidates, (b) the total visits to the Question ID, during the initial time window, is greater than sum of average visits to the Question ID by the plurality of candidates and the standard deviation of the total visits of the plurality of candidates, (c) the total saves of the selected option ID, during the initial time window, are less than difference of average saves of the option ID for the Question ID by the plurality of candidates and the standard deviation computed for the plurality of candidates for the total saves, (d) the total Questions visited and saved is greater than summation of mean for the plurality of candidates performing visiting and saving of the questions, and standard deviation computed for the plurality of candidates performing visiting and saving of the questions, and (e) the total Questions with changes in the selected option ID is greater than a mean computed for changing selected option ID by the plurality of candidates summed up with the standard deviation computed for the plurality of candidates associated with the activity. Furthermore, Further, the system is configured to identify the candidate from the set of outlier candidates, as candidate involved in Unfair Means (UFM) during the digital assessment if information derived from the raw log data and additional information associated with the candidate and an assessment center among the plurality of assessment centers maps to at least one of a plurality of checks. The plurality of checks based on the information of candidate comprising: (a) an idle time above a predefined threshold exists between saving the selected option IDs of two consecutive questions, (b) score achieved by the set of outlier candidates falls into the Top Scorer Candidates bracket, (c) the assessment center has past records of malpractice, (d) one or more security incidents are raised and recorded for the digital assessment at the assessment center, (e) the drive belongs to a high scoring drive and the score obtained is not encrypted, (f) a seating arrangement of one or more among the set of outlier candidates depicts a pattern among known patterns of cheating associated seating arrangement, (g) a suspected device address is being used, and (h) a candidate is identified to be a demographic suspect due to mismatch between place of the assessment center and a home address of the candidate.

In yet another aspect, there are provided one or more non-transitory machine-readable information storage mediums comprising one or more instructions, which when executed by one or more hardware processors causes a method for candidate response analysis during timed interval of digital assessment using statistical approach.

The method includes extracting a plurality of metrics and activity parameters from a sourced raw log data associated with a plurality of candidates attempting a digital assessment across a plurality of assessment centers in a single drive of the digital assessment, wherein the plurality of metrics and activity parameters are extracted for an initial time window and a terminal time window predefined within an exam duration, wherein the plurality of metrics and activity parameters, recorded at regular time interval for an exam duration for each candidate among the plurality of candidates, comprises a candidate Roll Number, a logged time, a device address of a device on which the exam is attempted, an a launcher type of the device, an IP Address of the device, an exam Subject ID, a Candidate Status recorded against time, a Question ID of each Question among a plurality of questions in the digital assessment, a set of activities associated while responding to each question, a plurality of Options IDs available for the associated Question ID, a selected Option ID for responding to a Question associated with the Question ID, a System Name, and a selected Question Language.

Further, the method includes extracting a plurality of attributes of each of the plurality of candidates by processing the plurality of metrics and activity parameters. The plurality of attributes associated with the initial time window for each of the plurality of candidates comprising Total Activities performed from among the set of activities, Total Visits to the Question ID, Total Saves of the selected option ID for the plurality of questions ques, Total Marked questions for review among the plurality of question, the Questions IDs Visited, the Questions IDs Saved, the Questions IDs Marked for review, unique Questions visited, the unique Question IDs saved with selected option ID, the unique Questions marked for review, questions only visited, questions only saved, and questions only marked for review. The plurality of attributes associated with the terminal time window for each of the plurality of candidates comprising the total Questions saved, the total Questions visited and saved, the total questions saved without change in the selected option ID, the total Question saved with change in the selected option ID.

Furthermore, the method includes determining a set of outlier candidates from among the plurality of candidates based on a statistical technique applied on the plurality of attributes of each of the plurality of candidates. The statistical technique determines a candidate from among the plurality of candidates to fall into the set of outlier candidates based on a five metric criteria determining if: (a) the total activities of the candidate, during the initial time window, are greater than an average of total activities performed by the plurality of candidates summed up with standard deviation of the total activities of the plurality of candidates, (b) the total visits to the Question ID, during the initial time window, is greater than sum of average visits to the Question ID by the plurality of candidates and the standard deviation of the total visits of the plurality of candidates, (c) the total saves of the selected option ID, during the initial time window, are less than difference of average saves of the option ID for the Question ID by the plurality of candidates and the standard deviation computed for the plurality of candidates for the total saves, (d) the total Questions visited and saved is greater than summation of mean for the plurality of candidates performing visiting and saving of the questions, and standard deviation computed for the plurality of candidates performing visiting and saving of the questions, and (e) the total Questions with changes in the selected option ID is greater than a mean computed for changing selected option ID by the plurality of candidates summed up with the standard deviation computed for the plurality of candidates associated with the activity. Furthermore, the method includes identifying the candidate from the set of outlier candidates, as candidate involved in Unfair Means (UFM) during the digital assessment if information derived from the raw log data and additional information associated with the candidate and an assessment center among the plurality of assessment centers maps to at least one of a plurality of checks. The plurality of checks based on the information of candidate comprising: (a) an idle time above a predefined threshold exists between saving the selected option IDs of two consecutive questions, (b) score achieved by the set of outlier candidates falls into the Top Scorer Candidates bracket, (c) the assessment center has past records of malpractice, (d) one or more security incidents are raised and recorded for the digital assessment at the assessment center, (e) the drive belongs to a high scoring drive and the score obtained is not encrypted, (f) a seating arrangement of one or more among the set of outlier candidates depicts a pattern among known patterns of cheating associated seating arrangement, (g) a suspected device address is being used, and (h) a candidate is identified to be a demographic suspect due to mismatch between place of the assessment center and a home address of the candidate.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serves to explain the disclosed principles:
FIG. 1A is a functional block diagram of a system, for candidate response analysis during timed interval of digital assessment using statistical approach, in accordance with some embodiments of the present disclosure.
FIG. 2A illustrates n process overview of the system of FIG. 1A, in accordance with some embodiments of the present disclosure.
FIG. 2B illustrates an architectural overview of the system of FIG. 1A, in accordance with some embodiments of the present disclosure.
FIG. 3 is a flow diagram illustrating a method for candidate response analysis during timed interval of digital assessment using statistical approach, using the system depicted in FIG. 1A and process overview of FIG. 2A, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As mentioned in the background section, the log data of candidates during exam hold huge amount of information, however the technical challenge lies in devising techniques that enable to derive the right and true insights on possible malpractice in time and cost-efficient manner. It is obvious that manual observation of records and invigilation is challenging considering the enormous data size of candidate logs to decipher and analyze. Further, it is critical to, in parallel, analyze security lapses and suspicious use of external devices. However, currently the technology is restricted to log data generation, however techniques for analyzing log information to derive behavioral patterns that enable malpractice detection remain unexplored.

Embodiments of the present disclosure provide a method and system for candidate response analysis during timed interval of digital assessment using statistical approach. The method disclosed provides a two-stage approach wherein the first stage analyzes raw log data of candidates to extract a set of attributes capturing activities of candidates in response to the questions appearing in the digital assessment. Further, a unique statistical analysis is performed on the extracted attributes to determine outlier candidates that reflect anomalous behavior. Thereafter, at the second stage the set of outlier candidates are further analyzed and filtered based on a plurality of checks against events that contribute towards possible malpractice or unfair means involved before and during exam duration. Thus, the outlier candidates that map to any one of the checks are identified to under attempting exam with Unfair means (UFM).

The method disclosed provides capability in analyzing huge volumes of log data, bringing in time efficient analysis for UFM detection. The log data of the candidate are captured, compiled, mapped and analyzed with various other attributes captured in real time and stored. The two-stage approach firstly applies statistical analysis on extracted attributes based on standard deviation and mean computed for the attributes for the candidates attempting the digital assessment to identify outliers or possible suspects. To ensure reducing false positive, a second level of check is applied on the outliers to identify and pinpoint candidates with unusual behavior pattern from a large data set. Thus, the approach disclosed by the method analyzes the cumulative effect of the candidate behavior in relation to all the other candidates, effectively identifying true outliers.

Furthermore, by analyzing the UFM and associated exam center data, notifications and/or alerts can be generated and sent to the exam administration and control center systems for improving vigilance. Thus, the method and the system disclosed enables detection of presence of UFM by providing the two-stage analysis approach capable of analyzing huge volumes of data in time efficient manner with highly scalable approach. The method eliminates manual analysis and does not require per candidate node level observation at every exam center. The method also enables determining low performing exam centers or assessment centers based scale at which UFM is noticed at the assessment or exam center.

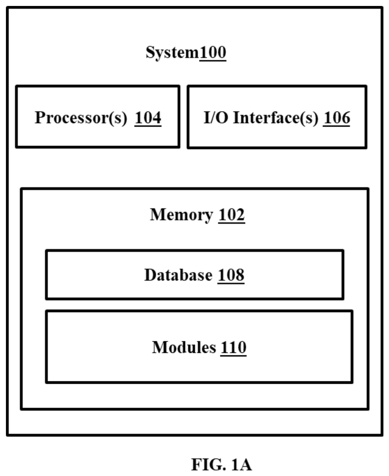

Referring now to the drawings, and more particularly to FIGS. 1A through 3, where similar reference characters denote corresponding features consistently throughout the figures, there are shown preferred embodiments, and these embodiments are described in the context of the following exemplary system and/or method.

FIG. 1A is a functional block diagram of a system 100 for candidate response analysis during timed interval of digital assessment using statistical approach, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices, for example to source raw log data from servers

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as modules for extracting plurality of attributes from the log data, performing statistical analysis on the extracted attributes to determine outliers candidates and performing check to determine candidates from among the outliers that are identified to as using UFM.

The plurality of modules 110 include programs or coded instructions that supplement applications or functions performed by the system 100 for executing different steps involved in the process of candidate response analysis during timed interval of digital assessment using statistical approach., being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database stores the sourced raw log data that is processed for determining candidates applying unfair means for the digital assessment. The database (or repository) 108 may include a plurality of abstracted pieces of code for refinement and data that is processed, received, or generated as a result of the execution of the plurality of modules in the module(s) 110.

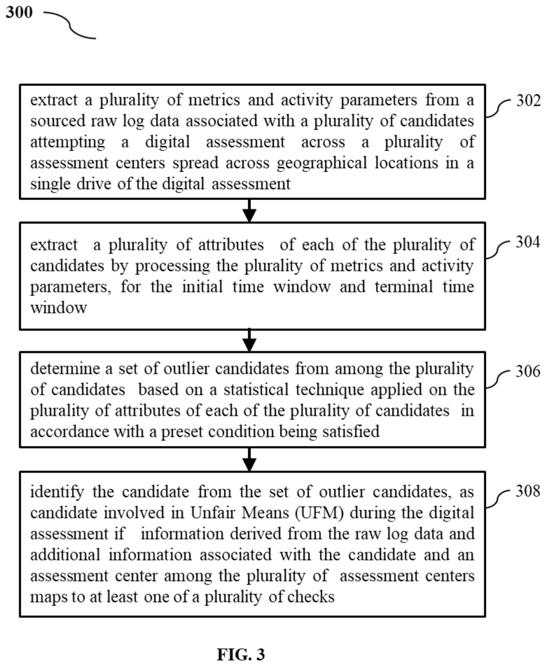

Although the database 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 3.

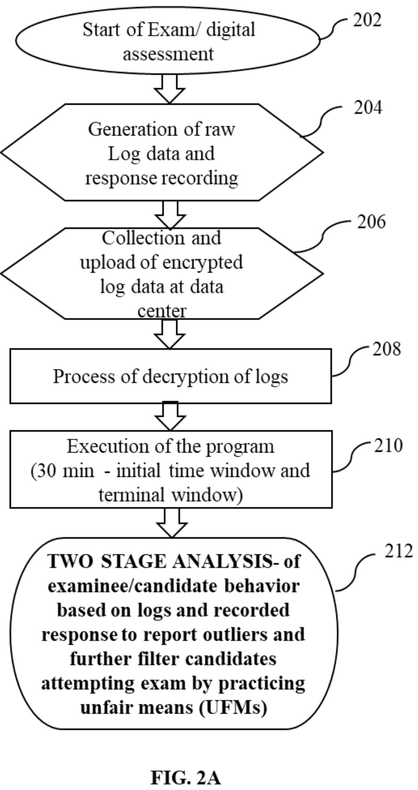

FIG. 2A illustrates an process overview of the system of FIG. 1A, in accordance with some embodiments of the present disclosure. FIG. 2A is explained in conjunction with FIG. 3. As depicted, from audit log ( raw log data sourced from servers), a specific time period analysis is carried out covering an initial time window and a terminal time window within the time duration of the digital assessment. In an specific implementation, the time windows considered for analysis correspond to typically first 30 min and last 30 min of exam. The time window is selected such that it captures a very comprehensive view of candidate response pattern to help identify candidates with high probability of being involved in malpractice or UFM such as leaking questions in first 30-minutes and receiving solved answers in the last 30-minutes. The log data in the time window is analyzed to obtain candidates' activities, compare their behaviors, and examine their response patterns.

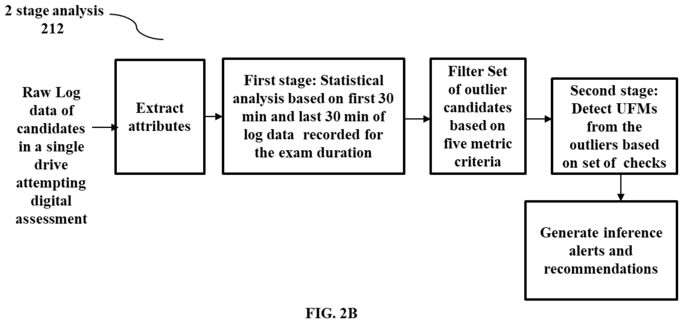

Candidate Audit Log Report can be generated at Candidate or Drive level. For example, at a time, the drive of maximum 250 candidates are served, in an exam center. As depicted in process overview of FIG. 2, the log data of all candidates per drive is captured when exam starts
Step 202: (Start of the Exam): The examination or digital assessment starts as per the scheduled time. The candidate's login and starts to attempt the questions. The response of their attempts and their activities are being captured. The candidate's device ( node) is attached to one of the servers. At a time, Drive of maximum 250 candidates are served. Further the server is attached to a command center from the candidate system end.
Step 204: (Generation and Capture of the log and response): Following details from the log data that refer to activities and parameters associated with the candidate are being captured:
   - Roll Number: Unique identification number assigned to the candidate.
   - Logged Time: Candidate logged in time
   - Launcher Type: Operating System
   - MAC Address: A unique, 12-character alphanumeric attribute that is used to identify individual computers on a network.
   - IP Address: It is the unique identifying number assigned to every computer connected to the internet
   - Subject ID: Unique number to identify the subject
   - Candidate Status: The current status of the candidate w.r.t the time, e.g. candidate clicked the submit button, profile confirmation, section and question details etc.
   - Question ID: Every question is identified through a unique ID
   - Activity - Activities performed by the candidate w.r.t time e.g. candidate visited answered or unanswered question number X from number panel, visited marked question X from number panel etc.
   - Selected Option ID - Option ID selected by the candidate
   - All Options - All the option IDS
   - System Name - Every System has a unique number assigned to it for identification.
   - Question Language-The language of the question paper
   - All the above parameters are being captured on the basis of candidate click/response
Step 206: (Collection and upload of encrypted logs at data center): All the logs captured in the second step are uploaded in the data center such as the repository or database 108 in the encrypted form.
Step 208: (Process of decryption of logs): The logs get decrypted and once the logs get decrypted, audit logs are generated.
Step 210: (Execution of the program (30 min time window)- In an implementation a Python coded program is run which generates audit log analysis report.
Step 212: - (Examinee/candidate behavior based on audit log analysis report logs and recorded). This step applies a two-stage (2 stage) analysis approach that includes statistical approach as first stage to identify outliers or possible suspects and reconfirming the UFM candidates to remove false positives by applying a checklist to filter out the final list of UFM candidates to be reported.

FIG. 2B depicts a two-stage analysis approach performed by the system to detect candidates practicing unfair means (UFM) during the digital assessment, in accordance with some embodiments of the present disclosure. FIG. 2B is further understood in conjunction with FIG. 3

FIG. 3 is a flow diagram illustrating a method 300 for candidate response analysis during timed interval of digital assessment using statistical approach, using the system depicted in FIGS. 1A and, FIGS. 2A and 2B, in accordance with some embodiments of the present disclosure. In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A, process overview as depicted in FIG. 2A, and the steps of flow diagram as depicted in FIG. 3. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 300, at step 302 of the method 300, the one or more hardware processors 104 are configured by the instructions to extract a plurality of metrics and activity parameters from a sourced raw log data associated with a plurality of candidates attempting the digital assessment in a single drive of the digital assessment. The raw log data of the candidates are sourced from data centers. wherein the log data per candidate, which is captured drive wise during the duration of digital assessment is encrypted and is stored post encryption The assessment centers can be spread across a plurality of assessment centers spread across geographical locations. The plurality of metrics and activity parameters are extracted for an initial time window and a terminal time window predefined within an exam duration, wherein the plurality of metrics and activity parameters, recorded at regular time interval for an exam duration for each candidate among the plurality of candidates, comprises a candidate Roll Number, a logged time, a device address of a device on which the exam is attempted, a launcher type of the device, an IP Address of the device, an exam Subject ID, a Candidate Status recorded against time, a Question ID of each Question among a plurality of questions in the digital assessment, a set of activities associated while responding to each question, a plurality of Options IDs available for the associated Question ID, a selected Option ID for responding to a Question associated with the Question ID, a System Name, and a selected Question Language.

Once the raw log data raw files are sourced, they are decrypted and then processed. Thus, at step 304 of the method 300, the one or more hardware processors 104 are configured by the instructions to extract a plurality of attributes of each of the plurality of candidates by processing the plurality of metrics and activity parameters.

The plurality of attributes associated with the initial time window for each of the plurality of candidates comprising Total Activities performed from among the set of activities, Total Visits to the Question ID, Total Saves of the selected option ID for the plurality of questions ques, Total Marked questions for review among the plurality of question, the Questions IDs Visited, the Questions IDs Saved, the Questions IDs Marked for review, unique Questions visited, the unique Question IDs saved with selected option ID, the unique Question marked for review, questions only visited, questions only saved, and questions only marked for review.

The plurality of attributes associated with the terminal time window for each of the plurality of candidates comprising the total Questions saved, the total Questions visited and saved, the total questions saved without change in the selected option ID, the total Question saved with change in the selected option ID.

Table 1 below list the attributes and descriptions.

**Table 1**

| **Attribute** | **Description** | **Calculation Method** |
|---|---|---|
| Total Actions | Total Actions performed by candidate in first 30 min of examination after exam start | Count of all actions |
| Total Visits | Total visits carried out in first 30 min | Count of all "Visit' actions + count of all "Save & Next" without a valid response |
| Total Saves | Total Save & Next actions in first 30 min | Count of all "Save and Next" action with a valid response |
| Total Mark | Total Mark for review action in first 30 min | Count of all "Mark for Review" action |
| Unique Questions Visited | Number of Unique questions that were visited by candidate in first 30 min | Find the count of questions having a visited action - it is possible that a question was visited multiple time, it shall be counted as a single question visited |
| Unique Questions Saved | Number of unique questions that were saved by candidate in first 30 min with a valid response | Total count of questions having a "Save and Next" action - it is possible that a question was responded multiple time, but that shall be counted as a single question responded |
| Unique Questions Marked | Number of unique questions that were marked for review with a valid response in first 30 min of exam | Find the count of questions having a Marked for Review action - it is possible that a question was Marked multiple time, we will be counting it as a single question marked for review |
| Questions only visited | Number of questions that were only visited in first 30 min | From list of questions having 'visited' action, remove questions that were saved and questions that were marked for review |
| Questions only saved | Number of questions that were only saved in first 30 min | From list of questions having 'Save & Next" action, remove questions that were visited and questions that were marked for review |
| Questions only Marked | Number of questions that were only marked for review in first 30 min | From list of questions having 'Mark for Review" action, remove questions that were visited and questions that were "Saved" |
| Total Questions Responded/saved in last 30 min | Total number of questions with valid response saved in last 30 min of exam | Find the count of questions that have "Save and Next" action with a valid response in in last 30 min of exam (Last 30 min is calculated as Exam Submit time - 30 min) |
| Question that was viewed and responded in last 30 min only | Number of questions that were viewed and responded only in last 30 min and not any time before | Find all the questions that were answered to in the last 30 min and check if these questions were responded to or visited any time before the last 30 min interval. |
| | | Questions that were not responded or visited during rest of exam duration will be counted here |
| Question Responded in last 30 min but option Not Changed | Number of questions that were responded in last 30 min too, but their response was not changed | Find the questions that were responded to in the last 30 min along with their response. |
| | | For these questions check if they were responded to before the last 30 min and the response provided. |
| | | Count the questions that have same response in last 30 min as well as rest of exam |
| Question Response Changed | Number of questions that were responded in last 30 min too and their response was changed | Find the questions that were responded to in the last 30 min along with their response. |
| | | For these questions check if they were responded to before the last 30 min and the response provided. |
| | | Count the questions that have different response in last 30 min as well as rest of exam |

Once the raw log data raw files are sourced, they are decrypted and then processed. Thus, at step 304 of the method 300, the one or more hardware processors 104 are configured by the instructions to determining a set of outlier candidates from among the plurality of candidates based on a statistical technique applied on the plurality of attributes of each of the plurality of candidates. The statistical technique determines a candidate from among the plurality of candidates to fall into the set of outlier candidates based on a preset condition applied on a five metric criteria wherein the disclosed standard deviation and mean combination enables more accurate identification of outliers (reduces false positives) based on a preset condition stating *"at least 3 or more metrics (parameters) from among the five metric criteria if set to 1 then corresponding candidate to be identified as outlier".* The five metric criteria determines whether:
a) The total activities of the candidate, during the initial time window, are greater than an average of total activities performed by the plurality of candidates summed up with standard deviation of the total activities of the plurality of candidates. If 'total activities ' check is greater the candidate status is set to '1' else '0'
b) The total visits to the Question ID, during the initial time window, is greater than sum of average visits to the Question ID by the plurality of candidates and the standard deviation of the total visits of the plurality of candidates. If ' total visits'' check is greater the candidate status is set to '1' else '0'.
c) The total saves of the selected option ID, during the initial time window, are less than difference of average saves of the option ID for the Question ID by the plurality of candidates and the standard deviation computed for the plurality of candidates for the total saves. If ' total saves'' check is greater the candidate status is set to '1' else '0'.
d) The total Questions visited and saved is greater than summation of mean for the plurality of candidates performing visiting and saving of the questions, and standard Deviation computed for the plurality of candidates performing visiting and saving of the questions. If ' total questions visited and saved' check is greater the candidate status is set to '1' else '0'.
e) The total Questions with changes in the selected option ID is greater than a mean computed for changing selected option ID by the plurality of candidates summed up with the standard deviation computed for the plurality of candidates associated with the activity. If ' total Questions with changes in the selected option ID' check is greater the candidate status is set to '1' else '0'.

Table 2A and 2B below provides extracted attributes (also referred to as audit log report) for a candidate.

**Table 2A**

| **Roll Number** | **Start Time** | **End Time** | **Total Actions** | **Total Visits** | **Total Saves** | **Total Mark** | **Unique Questions Visited** |
|---|---|---|---|---|---|---|---|
| 1 | 2024-05-22 09:00:06 | 2024-05-22 09:30:06 | 122 | 54 | 47 | 16 | 31 |
| 2 | 2024-05-22 09:00:02 | 2024-05-22 09:30:02 | 166 | 97 | 53 | 0 | 47 |
| 3 | 2024-05-22 09:00:01 | 2024-05-22 09:30:01 | 100 | 45 | 40 | 6 | 28 |

**Table 2B**

| **Uni que Que stion s Save d** | **Uniq ue Ques tions Mar ked** | **Que stio ns only visit ed** | **Que stio ns onl y sav ed** | **Que stio ns only Mar ked** | **Total Questio ns Respon ded in last 30 min** | **Question that were viewed and responded in last 30 min only** | **Question Responded in last 30 min but option Not Changed** | **Ques tion Resp onse Chan ged** |
|---|---|---|---|---|---|---|---|---|
| 36 | 16 | 3 | 15 | 5 | 34 | 0 | 26 | 8 |
| 34 | 0 | 15 | 2 | 0 | 32 | 0 | 24 | 8 |
| 30 | 6 | 12 | 14 | 2 | 6 | 0 | 4 | 2 |

**Table 3**

| **Participant Id** | **Total action greater equal mean plus std** | **Total visit action greater equal mean plus std** | **Total save action greater equal mean minus std** | **Question Viewed Responded In Last Thirty min Only greater equal mean plus std** | **Question Viewed Responded/Changed In Last Thirty min greater equal mean plus std** |
|---|---|---|---|---|---|
| 12345 | 1 | 1 | 1 | 0 | 1 |
| 13452 | 0 | 1 | 0 | 0 | 0 |
| 15432 | 0 | 0 | 0 | 1 | 0 |

Table 3 indicates outliers candidates with each of the five metric criteria either set to '1' or '0', wherein '1' indicates corresponding criteria defined for the column is 'satisfied' while '0' indicates 'not satisfied'. Thereafter, the preset condition stating "*at least 3 or more metrics (parameters) from among the five metric criteria if set to 1 then corresponding candidate to be identified as outlier"* is checked. Thus, in the Table 3 above, the roll number 12345 has more than 3 metric parameters (4 herein) set to 1 and is identified as outlier...

On extracting the attributes, at step 306 of the method 300, the one or more hardware processors 104 are configured by the instructions to identify the candidate from the set of outlier candidates, to be following Unfair Means (UFM) during the digital assessment if information derived from the raw log data and additional information associated with the candidate and an assessment center among the plurality of assessment centers maps to at least one of a plurality of checks. The plurality of checks based on the information of candidate comprising:
- An idle time above a predefined threshold exists between saving the selected option IDs of two consecutive questions. The predefined threshold is defined by subject matter experts (SMEs) and can vary based on assessment requirements.
- Score achieved by the set of outlier candidates falls into the Top Scorer Candidates bracket. This raises a suspicion.
- The assessment center has past records of malpractice.
- One or more security incidents are raised and recorded for the digital assessment at the assessment center.
- The drive belongs to a high scoring drive and the score obtained is not encrypted.
- A seating arrangement of one or more among the set of outlier candidates depicts a pattern among known patterns of cheating associated seating arrangement.
- A suspected device address is being used. For example System/mac IDs previously having candidates identified with suspected behavior.
- A candidate is identified to be a demographic suspect due to mismatch between place of the assessment center and the home address of the candidate.

Listed is an example of one or more of above checks mapped for a candidate being analyzed using audit log and a fact that was recorded for the respective digital assessment on the day and time.

### Example:

### System 100 inference: Unusual Clicks, Activity, Saves and unusual time gap + monitor signature mismatch - UFM

### Fact: Question Paper sent outside or getting help from outside

Additionally, one or more UFMs from the set of outlier candidates are also identified based on Face and Biometric Comparisons such as Comparison of Registration biometrics and Bio Break/Exit Verification biometrics, Comparison of Registration biometrics and During exam biometrics, and Many to Many biometric comparisons based on toppers/zone/all candidates. Particular Candidate's identity (Photo/Biometrics like fingerprints etc.) are validated repeatedly at various time intervals of exam. E.g. Registration time, Bio break time, Exit time etc.. Also based on analysis requirement can be cross-validated across toppers/all candidates or on any kind of conditional basis

On the basis of the identified outliers/ UFMs, reports are generated as per the requirements solicited by agencies/customer. Further the UFM candidate along with data that led to the inference is provided to the command center for inferring based on list set of identified UFM. The outlier list so generated along with other captured data can be then used by Artificial intelligence trained model to generate alerts and recommendations

Thus, the method and the system disclosed enables detection of presence of UFM by providing the two-stage analysis approach capable of analyzing huge volumes of data in time efficient manner with highly scalable approach. The two stage approach is based on standard deviation, mean and the five-metric criteria enables analyzing the cumulative effect of the candidate behavior in relation to all the other candidates, effectively enabling identification of true outliers. The method eliminates manual analysis and does not require per candidate node level observation at every exam center. The method also enables determining low performing exam centers or assessment centers based scale at which UFM is noticed at the assessment or exam center.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), the method comprising:
extracting (302), via one or more hardware processors, a plurality of metrics and activity parameters from a sourced raw log data associated with a plurality of candidates attempting a digital assessment across a plurality of assessment centers in a single drive of the digital assessment, wherein the plurality of metrics and activity parameters are extracted for an initial time window and a terminal time window predefined within an exam duration, wherein the plurality of metrics and activity parameters, recorded at regular time interval for an exam duration for each candidate among the plurality of candidates, comprises a candidate Roll Number, a logged time, a device address of a device on which the exam is attempted, an a launcher type of the device, an IP Address of the device, an exam Subject ID, a Candidate Status recorded against time, a Question ID of each Question among a plurality of questions in the digital assessment, a set of activities associated while responding to each question, a plurality of Options IDs available for the associated Question ID, a selected Option ID for responding to a Question associated with the Question ID, a System Name, and a selected Question Language;
extracting (304), via one or more hardware processors, a plurality of attributes of each of the plurality of candidates by processing the plurality of metrics and activity parameters,
the plurality of attributes associated with the initial time window for each of the plurality of candidates comprising Total Activities performed from among the set of activities, Total Visits to the Question ID, Total Saves of the selected option ID for the plurality of questions ques, Total Marked questions for review among the plurality of question, the Questions IDs Visited, the Questions IDs Saved, the Questions IDs Marked for review, unique Questions visited, the unique Question IDs saved with selected option ID, the unique Questions marked for review, questions only visited, questions only saved, and questions only marked for review, and
the plurality of attributes associated with the terminal time window for each of the plurality of candidates comprising the total Questions saved, the total Questions visited and saved, the total questions saved without change in the selected option ID, the total Question saved with change in the selected option ID;
determining (306), via the one or more hardware processors, a set of outlier candidates from among the plurality of candidates based on a statistical technique applied on the plurality of attributes of each of the plurality of candidates,
wherein the statistical technique determines a candidate from among the plurality of candidates to fall into the set of outlier candidates based on a preset condition applied on a five metric criteria, determining whether,
a) the total activities of the candidate, during the initial time window, are greater than an average of total activities performed by the plurality of candidates summed up with standard deviation of the total activities of the plurality of candidates,
b) the total visits to the Question ID, during the initial time window, is greater than sum of average visits to the Question ID by the plurality of candidates and the standard deviation of the total visits of the plurality of candidates,
c) the total saves of the selected option ID, during the initial time window, are less than difference of average saves of the option ID for the Question ID by the plurality of candidates and the standard deviation computed for the plurality of candidates for the total saves,
d) the total Questions visited and saved is greater than summation of mean for the plurality of candidates performing visiting and saving of the questions, and standard deviation computed for the plurality of candidates performing visiting and saving of the questions, and
e) the total Questions with changes in the selected option ID is greater than a mean computed for changing selected option ID by the plurality of candidates summed up with the standard deviation computed for the plurality of candidates associated with the activity; and
identifying (308), via the one or more hardware processors, the candidate from the set of outlier candidates, to be practicing Unfair Means (UFM) during the digital assessment if information derived from the raw log data and additional information associated with the candidate and an assessment center among the plurality of assessment centers maps to at least one of a plurality of checks, the plurality of checks based on the information of candidate comprising:
an idle time above a predefined threshold exists between saving the selected option IDs of two consecutive questions,
score achieved by the set of outlier candidates falls into the Top Scorer Candidates bracket,
the assessment center has past records of malpractice,
one or more security incidents are raised and recorded for the digital assessment at the assessment center,
the drive belongs to a high scoring drive and the score obtained is not encrypted,
a seating arrangement of one or more among the set of outlier candidates depicts a pattern among known patterns of cheating associated seating arrangement,
a suspected device address is being used, and
a candidate is identified to be a demographic suspect due to mismatch between place of the assessment center and the home address of the candidate.

2. The processor implemented method as claimed in claim 1, wherein identifying one or more UFMs practicing candidates from the set of outlier candidates further comprises using Face and Biometric Comparisons comprising:
Comparison of Registration biometrics and Bio Break/Exit Verification biometrics,
Comparison of Registration biometrics and During exam biometrics, and
Many to Many biometric comparisons based on toppers/zone/all candidates.

3. The processor implemented method as claimed in claim 1, wherein the preset condition comprising, 'at least three or more metrics from among the five metric criteria if set to 1 then corresponding candidate to be identified as outlier'.

4. A system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
extract a plurality of metrics and activity parameters from a sourced raw log data associated with a plurality of candidates attempting a digital assessment across a plurality of assessment centers in a single drive of the digital assessment, wherein the plurality of metrics and activity parameters are extracted for an initial time window and a terminal time window predefined within an exam duration, wherein the plurality of metrics and activity parameters, recorded at regular time interval for an exam duration for each candidate among the plurality of candidates, comprises a candidate Roll Number, a logged time, a device address of a device on which the exam is attempted, an a launcher type of the device, an IP Address of the device, an exam Subject ID, a Candidate Status recorded against time, a Question ID of each Question among a plurality of questions in the digital assessment, a set of activities associated while responding to each question, a plurality of Options IDs available for the associated Question ID, a selected Option ID for responding to a Question associated with the Question ID, a System Name, and a selected Question Language;
extract a plurality of attributes of each of the plurality of candidates by processing the plurality of metrics and activity parameters,
the plurality of attributes associated with the initial time window for each of the plurality of candidates comprising Total Activities performed from among the set of activities, Total Visits to the Question ID, Total Saves of the selected option ID for the plurality of questions ques, Total Marked questions for review among the plurality of question, the Questions IDs Visited, the Questions IDs Saved, the Questions IDs Marked for review, unique Questions visited, the unique Question IDs saved with selected option ID, the unique Questions marked for review, questions only visited, questions only saved, and questions only marked for review, and
the plurality of attributes associated with the terminal time window for each of the plurality of candidates comprising the total Questions saved, the total Questions visited and saved, the total questions saved without change in the selected option ID, the total Question saved with change in the selected option ID;
determine a set of outlier candidates from among the plurality of candidates based on a statistical technique applied on the plurality of attributes of each of the plurality of candidates ,
wherein the statistical technique determines a candidate from among the plurality of candidates to fall into the set of outlier candidates based on a preset condition applied a five metric criteria, determining whether:
a) the total activities of the candidate, during the initial time window, are greater than an average of total activities performed by the plurality of candidates summed up with standard deviation of the total activities of the plurality of candidates,
b) the total visits to the Question ID, during the initial time window, is greater than sum of average visits to the Question ID by the plurality of candidates and the standard deviation of the total visits of the plurality of candidates,
c) the total saves of the selected option ID, during the initial time window, are less than difference of average saves of the option ID for the Question ID by the plurality of candidates and the standard deviation computed for the plurality of candidates for the total saves,
d) the total Questions visited and saved is greater than summation of mean for the plurality of candidates performing visiting and saving of the questions, and standard deviation computed for the plurality of candidates performing visiting and saving of the questions, and
e) the total Questions with changes in the selected option ID is greater than a mean computed for changing selected option ID by the plurality of candidates summed up with the standard deviation computed for the plurality of candidates associated with the activity; and
identify the candidate from the set of outlier candidates, as candidate involved in Unfair Means (UFM) during the digital assessment if information derived from the raw log data and additional information associated with the candidate and an assessment center among the plurality of assessment centers maps to at least one of a plurality of checks, the plurality of checks based on the information of candidate comprising:
an idle time above a predefined threshold exists between saving the selected option IDs of two consecutive questions,
score achieved by the set of outlier candidates falls into the Top Scorer Candidates bracket,
the assessment center has past records of malpractice,
one or more security incidents are raised and recorded for the digital assessment at the assessment center,
the drive belongs to a high scoring drive and the score obtained is not encrypted,
a seating arrangement of one or more among the set of outlier candidates depicts a pattern among known patterns of cheating associated seating arrangement,
a suspected device address is being used, and
a candidate is identified to be a demographic suspect due to mismatch between place of the assessment center and the home address of the candidate.

5. The system as claimed in claim 3, wherein the one or more hardware processors are configured to identify one or more UFMs practicing candidates from the set of outlier candidates further comprises using Face and Biometric comparisons comprising:
comparison of Registration biometrics and Bio Break/Exit Verification biometrics,
comparison of Registration biometrics and During exam biometrics, and
Many to Many biometric comparisons based on toppers/zone/all candidates.

6. The system as claimed in claim 3, wherein the preset condition comprising, 'at least three or more metrics from among the five metric criteria if set to 1 then corresponding candidate to be identified as outlier'.

7. One or more non-transitory machine-readable information storage mediums comprising one or more instructions which when executed by one or more hardware processors cause:
extracting a plurality of metrics and activity parameters from a sourced raw log data associated with a plurality of candidates attempting a digital assessment across a plurality of assessment centers in a single drive of the digital assessment, wherein the plurality of metrics and activity parameters are extracted for an initial time window and a terminal time window predefined within an exam duration, wherein the plurality of metrics and activity parameters, recorded at regular time interval for an exam duration for each candidate among the plurality of candidates, comprises a candidate Roll Number, a logged time, a device address of a device on which the exam is attempted, an a launcher type of the device, an IP Address of the device, an exam Subject ID, a Candidate Status recorded against time, a Question ID of each Question among a plurality of questions in the digital assessment, a set of activities associated while responding to each question, a plurality of Options IDs available for the associated Question ID, a selected Option ID for responding to a Question associated with the Question ID, a System Name, and a selected Question Language;
extracting a plurality of attributes of each of the plurality of candidates by processing the plurality of metrics and activity parameters,
the plurality of attributes associated with the initial time window for each of the plurality of candidates comprising Total Activities performed from among the set of activities, Total Visits to the Question ID, Total Saves of the selected option ID for the plurality of questions ques, Total Marked questions for review among the plurality of question, the Questions IDs Visited, the Questions IDs Saved, the Questions IDs Marked for review, unique Questions visited, the unique Question IDs saved with selected option ID, the unique Questions marked for review, questions only visited, questions only saved, and questions only marked for review, and
the plurality of attributes associated with the terminal time window for each of the plurality of candidates comprising the total Questions saved, the total Questions visited and saved, the total questions saved without change in the selected option ID, the total Question saved with change in the selected option ID;
determining a set of outlier candidates from among the plurality of candidates based on a statistical technique applied on the plurality of attributes of each of the plurality of candidates,
wherein the statistical technique determines a candidate from among the plurality of candidates to fall into the set of outlier candidates based on a preset condition applied on a five metric criteria, determining whether,
a) the total activities of the candidate, during the initial time window, are greater than an average of total activities performed by the plurality of candidates summed up with standard deviation of the total activities of the plurality of candidates,
b) the total visits to the Question ID, during the initial time window, is greater than sum of average visits to the Question ID by the plurality of candidates and the standard deviation of the total visits of the plurality of candidates,
c) the total saves of the selected option ID, during the initial time window, are less than difference of average saves of the option ID for the Question ID by the plurality of candidates and the standard deviation computed for the plurality of candidates for the total saves,
d) the total Questions visited and saved is greater than summation of mean for the plurality of candidates performing visiting and saving of the questions, and standard deviation computed for the plurality of candidates performing visiting and saving of the questions, and
e) the total Questions with changes in the selected option ID is greater than a mean computed for changing selected option ID by the plurality of candidates summed up with the standard deviation computed for the plurality of candidates associated with the activity; and
identifying the candidate from the set of outlier candidates, to be practicing Unfair Means (UFM) during the digital assessment if information derived from the raw log data and additional information associated with the candidate and an assessment center among the plurality of assessment centers maps to at least one of a plurality of checks, the plurality of checks based on the information of candidate comprising:
an idle time above a predefined threshold exists between saving the selected option IDs of two consecutive questions,
score achieved by the set of outlier candidates falls into the Top Scorer Candidates bracket,
the assessment center has past records of malpractice,
one or more security incidents are raised and recorded for the digital assessment at the assessment center,
the drive belongs to a high scoring drive and the score obtained is not encrypted,
a seating arrangement of one or more among the set of outlier candidates depicts a pattern among known patterns of cheating associated seating arrangement,
a suspected device address is being used, and
a candidate is identified to be a demographic suspect due to mismatch between place of the assessment center and the home address of the candidate.

8. The one or more non-transitory machine-readable information storage mediums of claim 7, wherein the one or more instructions which when executed by the one or more hardware processors further cause:
Comparison of Registration biometrics and Bio Break/Exit Verification biometrics,
Comparison of Registration biometrics and During exam biometrics, and
Many to Many biometric comparisons based on toppers/zone/all candidates.

9. The one or more non-transitory machine-readable information storage mediums of claim 7, wherein the one or more instructions which when executed by the one or more hardware processors further cause, 'at least three or more metrics from among the five metric criteria if set to 1 then corresponding candidate to be identified as outlier'.
